# EUROPÄISCHE PATENTANMELDUNG

(11) **EP 1 199 334 A1**
(43) Veröffentlichungstag der Anmeldung: **24.04.2002**
(21) Anmeldenummer: 01123279.0
(22) Anmeldetag: 04.10.2001
(51) Int. Cl.: C09C 1/00, H01B 1/08

(54) **Verfahren zur Herstellung elektrisch leitfähiger Pigmente**

(30) Priorität: 19.10.2000 DE 10051872
(71) Anmelder: MERCK PATENT GmbH, 64293 Darmstadt (DE)
(72) Erfinder: Glausch, Ralf, 64367 Mühltal (DE)
(74) Vertreter: Leifert, Elmar, Dr.

(57) **Zusammenfassung**

Die Erfindung betrifft ein Verfahren zur Herstellung elektrisch leitfähiger Pigmente auf der Basis von mit F⁻ und/oder PO₄³⁻ dotierten und auf einem Substrat als elektrisch leitfähige Schicht aufgebrachten Zinn-Mischoxiden, bei dem zunächst durch Fällung und anschließendes Ausglühen mit SnO₂ beschichtete Substrate hergestellt werden und anschließend in weiteren Verfahrensschritten diese SnO₂-Schicht in eine Zinn-Mischoxid-Schicht überführt wird, die mit F- und/oder PO₄³⁻ dotiert ist. Die Erfindung betrifft ferner elektrisch leitfähige Pigmente, die nach dem erfindungsgemäßen Verfahren hergestellt worden sind, die Verwendung dieser Pigmente zur Pigmentierung von Lacken, Druckfarben, Kunststoffsystemen oder Coatings sowie Lacke, Druckfarben, Kunststoffsysteme oder Coatings, die mit einem elektrisch leitfähigen Pigment, welches nach dem erfindungsgemäßen Verfahren hergestellt worden ist, pigmentiert sind.

## Beschreibung

Die Erfindung betrifft ein Verfahren zur Herstellung elektrisch leitfähiger Pigmente auf Basis von mit F⁻ und/oder PO₄³⁻ dotierten und auf einem Substrat als elektrisch leitfähige Schicht aufgebrachten Zinn-Mischoxiden. Die Erfindung betrifft ferner elektrisch leitfähige Pigmente, die nach dem erfindungsgemäßen Verfahren hergestellt worden sind, die Verwendung dieser Pigmente zur Pigmentierung von Lacken, Druckfarben, Kunststoffsystemen oder Coatings sowie Lacke, Druckfarben, Kunststoffsysteme oder Coatings, die mit einem elektrisch leitfähigen Pigment, welches nach dem erfindungsgemäßen Verfahren hergestellt worden ist, pigmentiert sind.

In vielen Bereichen der Technik besteht ein Bedarf an leitfähigen Pigmenten, mit denen zum Beispiel elektrisch leitfähige, antistatische oder elektromagnetische Wellen abschirmende Kunststoffe, Lacke, Beschichtungen oder ähnliches hergestellt werden können. In großen Mengen wird dazu leitfähiger Ruß eingesetzt, der jedoch aufgrund seiner hohen Lichtabsorption im sichtbaren Spektralbereich nicht für transparente, helle oder farbige Beschichtungen eingesetzt werden kann. Ein weiteres Problem ist die starke Absorption von Ruß im IR-Bereich, was zum Beispiel bei Sonneneinstrahlung zu einer vielfach unerwünschten Erwärmung der beschichteten Gegenstände führt.

Für helle, elektrisch leitfähige Beschichtungen werden deshalb beispielsweise mit Nickel beschichteter Graphit, Metallplättchen und Mischoxide, wie zum Beispiel mit Antimon dotiertes Zinndioxid (SnO₂) verwendet. Die genannten Mischoxide können dabei auch auf Trägern, beispielsweise auf plättchenförmigem Glimmer oder kugelförmigem Bariumsulfat, aufgebracht sein. Ein derartiger Einsatz eines Mischoxides als elektrisch leitfähige Schicht auf einem Substrat hat zum einen den Vorteil, daß sich das Verhalten der Pigmente in Lacksystemen und auf anderen polymeren Schichten verbessert und zum anderen, daß der Preis dieser Systeme gesenkt werden kann.

Die US-A-4,431,764 beschreibt beispielsweise transparente, elektrisch leitfähige Überzüge, die aus einem filmbildenden Bindemittel und fein verteiltem Zinnoxid bestehen, das mit 0,1 bis 20 Gew.-% Antimon in Form von Sb₂O₃ oder Sb₂O₅ dotiert ist. Aus der EP-A-0 375 575 sind leitfähige plättchenförmige Pigmente bekannt, die als leitfähige Schicht ein mit Antimon dotiertes Zinnoxid aufweisen, wobei zwischen der leitfähigen Schicht und dem Substrat eine dünne Siliciumdioxidschicht angeordnet ist. Das Aufbringen einer zusätzlichen Schicht auf das Substrat bedeutet jedoch einen erheblichen Mehraufwand bei der Herstellung und führt somit zu einer Verteuerung des Pigmentes. Außerdem besitzen antimonhaltige Zinnoxide den Nachteil, daß sie je nach Antimongehalt und Glühtemperatur unterschiedlich stark blau eingefärbt sind. Hinzu kommt, daß antimonoxidhaltige Zinnoxide sowie allgemein antimonoxidhaltige Stoffe aus toxikologischer Sicht nicht unbedenklich erscheinen.

In der JP 60-223167 und der JP 62-050344 werden mit Indium-Zinnoxid (ITO) beschichtete Mica- und Kaolin-Plättchen beschrieben, die sich durch eine relativ hohe Transparenz und eine relativ gute elektrische Leitfähigkeit auszeichnen. Der Nachteil dieser Pigmente liegt jedoch in dem relativ hohen Preis für Indium. Die DE-A-43 33 673 beschriebt elektrisch leitfähige Pigmente, in denen anstelle des Antimonoxids auch Oxide des Aluminiums als Dotierstoffe eingesetzt werden. Der Nachteil dieser Mischoxide besteht allerdings in der geringen zeitlichen Stabilität des Widerstandes dieser Pigmente.

Um elektrisch leitfähige Pigmente mit einem möglichst hohen und zeitlich stabilen elektrischen Widerstand zu erhalten, wurde daher in der DE-A-198 11 694 Zinn-Mischoxid mit Fluorid (F-) und/oder Phosphor (P⁵⁺) dotiert, indem hydrolysierbare Zinn(II)- und Zinn(IV)-Verbindungen in Gegenwart von einem oder mehreren Fluoriden und/oder Phosphorverbindungen in Wasser umgesetzt werden. Die so erhaltenen dotierten Mischoxide wurden dabei als elektrisch leitfähige Schicht auf einem Substrat aufgebracht.

Das Herstellungsverfahren, mit dem diese mit F⁻ und/oder P⁵⁺ dotierten und auf einem Substrat aufgebrachten elektrisch leitfähigen Schichten hergestellt worden sind, ist jedoch vergleichsweise teuer und aufwendig. Eine andere Möglichkeit zur Herstellung elektrisch leitfähiger Pigmente auf der Basis von mit F⁻ und/oder P⁵⁺ dotierten Zinn-Mischoxiden besteht darin, SnO₂, SnO sowie F⁻ und/oder PO₄³⁻ unter hoher mechanischer Kraft zu vermahlen und anschließend unter Stickstoffatmosphäre auszuglühen. Auf diese Weise können zwar elektrisch leitfähige Pigmente mit einem Widerstand zwischen 200 und 300 Ω·cm erhalten werden, diese Produkte weisen jedoch eine starke Rauhigkeit der Oberfläche auf und können daher nur begrenzt in Polymerlösungen, wie Lacken, eingesetzt werden. Außerdem ist eine Einsatz dieser Produkte als elektrisch leitfähige Schicht auf Substraten auf diesem Wege nicht möglich.

Die Aufgabe der vorliegenden Erfindung lag demnach in der Bereitstellung eines Verfahrens zur Herstellung elektrisch leitfähiger Pigmente auf der Basis von mit F⁻ und/oder PO₄³⁻ dotierten und auf einem Substrat als elektrisch leitfähige Schicht aufgebrachten Zinn-Mischoxiden, welches vergleichsweise einfach und kostengünstig ist. Dieses Verfahren soll dennoch zu elektrisch leitfähigen Pigmenten führen, die akzeptable Leitfähigkeiten besitzen und die zuvor genannten Nachteile zumindest in geringerem Ausmaß aufweisen.

Überraschender Weise wurde nun gefunden, daß eletrisch leitfähige Pigmente auf der Basis von mit F⁻ und/oder PO₄³⁻ dotieren und auf einem Substrat als elektrisch leitfähige Schicht aufgebrachten Zinn-Mischoxiden hergestellt werden können, indem zunächst in einem einfachen und kostengünstigen Verfahren mit SnO₂ beschichtete Substrate hergestellt werden und indem anschließend in weiteren Verfahrensschritten diese SnO₂-Schicht in eine Zinn-Mischoxid-Schicht überführt wird, die mit F⁻ und/oder PO₄³⁻ dotiert ist.

Gegenstand der vorliegenden Erfindung ist daher ein Verfahren zur Herstellung elektrisch leitfähiger Pigmente auf der Basis von mit F⁻ und/oder PO₄³⁻ dotierten und auf einem Substrat als elektrisch leitfähige Schicht aufgebrachten Zinn-Mischoxiden. In diesem Verfahren wird zunächst durch die Zugabe einer hydrolysierbaren Zinn(IV)-Verbindung zu einer wässerigen Lösung, die das Substrat in suspendierter Form enthält, bei einem pH-Wert und einer Temperatur, die die vollständige Hydrolyse der Zinn(IV)-Verbindung ermöglichen, ein mit Zinn(IV)oxidhydratbeschichtetes Substrat hergestellt, welches von der Suspension abgetrennt und gegebenenfalls ausgewaschen und getrocknet wird und welches anschließend bei einer Temperatur zwischen 600 und 1000°C unter Bildung eines mit SnO2 beschichteten Substrates ausgeglüht wird.

Die hydrolysierbare Zinn(IV)-Verbindung wird dabei bevorzugt in einer solchen Menge eingesetzt, daß das SnO₂ nach dem Ausglühen des mit Zinn(IV)oxidhydratbeschichteten Substrates einen Gewichtsanteil von 5 bis 200 Gew.-%, bevorzugt von 30 bis 100 Gew.-%, besonders bevorzugt von 40 bis 60 Gew.-%, bezogen auf das Gewicht des Substrates besitzt.

Als Substrat können alle in Wasser unlöslichen anorganischen Verbindungen, vorzugsweise in Form plättchenförmiger oder auch sphärischer Partikel, eingesetzt werden. Als Substrat werden bevorzugt Glimmer, Glas-Flakes, Talkum, Graphit, Al₂O₃, BaSO₄, ZnO, SiO₂ oder aber eine Mischung aus diesen Stoffen verwendet. Diese Partikel weisen bevorzugt einen mittleren Durchmesser von weniger als 150 µm und besonderes bevorzugt von nicht mehr als 100 µm auf. Plättchenförmige Substrate weisen in der Hauptdimension bevorzugt eine Ausdehnung von weniger als 150 µm und besonders bevorzugt von weniger als 100 µm auf, und die Dicke beträgt bevorzugt weniger als 10 µm, besonders bevorzugt nicht mehr als 2 µm. Das Verhältnis der Ausdehnung in der Hauptdimension zur Dicke (*aspect ratio*) beträgt bei den plättchenförmigen Substraten bevorzugt mehr als 3 und besonders bevorzugt mehr als 5.

In weiteren Verfahrensschritten wird die SnO₂-Schicht anschließend in eine Zinn-Mischoxid-Schicht überführt, die mit F⁻ und/oder PO₄³⁻ dotiert ist.

In einer bevorzugten Ausführungsform des erfindungsgemäßen Verfahrens erfolgt diese Überführung der SnO₂-Schicht in eine Zinn-Mischoxid-Schicht, die mit F⁻ und/oder PO₄³⁻ dotiert ist, indem das mit SnO₂ beschichtete Substrat zunächst mit einem Reduktionsmittel unter Bildung eines mit einem SnO₂/SnO/Sn-Mischoxid beschichteten Substrates reduziert wird. Als Reduktionsmittel wird hierbei bevorzugt Wasserstoff oder Silicium verwendet. Das mit diesem Zinn-Mischoxid beschichtete Substrat wird anschließend mit Salzen oder Salzmischungen, die F⁻ und/oder PO₄³⁻ enthalten, vermahlen und schließlich bei einer Temperatur zwischen 300 und 900°C unter Ausschluß von Sauerstoff ausgeglüht. Dabei wird ein Substrat erhalten, welches mit einer mit F⁻ und/oder PO₄³⁻ dotierten Zinn-Mischoxid-Schicht beschichtet ist. Als Salze oder Salzmischungen, die F⁻ und/oder PO₄³⁻ enthalten, werden dabei bevorzugt NaF, NH₄F, Na₂HPO₄, (NH₄)₂HPO₄ oder Mischungen aus diesen Salzen verwendet. Diese Salze oder Salzmischungen werden mit den mit einem SnO₂/SnO/Sn-Mischoxid beschichteten Substraten bevorzugt in einer solchen Menge vermahlen, daß die Salze oder Salzmischungen einen Gewichtsanteil von 1 bis 15 Gew.-%, besonders bevorzugt von 2 bis 10 Gew.-%, ganz besonders bevorzugt von 4 bis 8 Gew.-% bezogen auf das Gewicht des mit dem SnO₂/SnO/Sn-Mischoxid beschichteten Substrates besitzen.

In einer weiteren, bevorzugten Ausführung des erfindungsgemäßen Verfahrens erfolgt die Überführung der SnO₂-Schicht in eine Zinn-Mischoxid-Schicht, die mit F⁻ und/oder PO₄³⁻ dotiert ist, indem das mit SnO₂ beschichtete Substrat mit SnF₂ und/oder SnHPO₄ vermahlen und schließlich bei einer Temperatur zwischen 300 und 900°C unter Ausschluß von Sauerstoff ausgeglüht wird. Dabei wird ein Substrat erhalten, welches mit einer mit F- und/oder PO₄³⁻ dotierten Zinn-Mischoxid-Schicht beschichtet ist. Das mit SnO₂ beschichtete Substrat wird mit SnF₂ und/oder SnHPO₄ bevorzugt in einer solchen Menge vermahlen, daß SnF₂ und/oder SnHPO₄ einen Gewichtsanteil von 1 bis 15 Gew.-%, besonders bevorzugt von 2 bis 10 Gew.-%, ganz besonders bevorzugt von 4 bis 8 Gew.-% bezogen auf das Gewicht des mit SnO2 beschichteten Substrates besitzen.

Bei dem erfindungsgemäßen Verfahren werden bevorzugt F⁻ und PO₄³⁻ zur Dotierung eingesetzt. Dabei liegt das Mengenverhältnis von F⁻ zu PO₄³⁻ bevorzugt zwischen 1:2 und 2:1.

Das erfindungsgemäße Verfahren ist im Vergleich zur Fällung von hydrolysierbaren Zinn(II)- und Zinn(IV)-Salzen in Gegenwart von F⁻ und/der PO₄³⁻ weniger aufwendig und zudem kostengünstiger und liefert dennoch elektrisch leitfähige Pigmente mit akzeptablen Widerständen.

Die Erfindung betrifft ferner elektrisch leitfähige Pigmente, die nach dem erfindungsgemäßen Verfahren hergestellt worden sind.

Die Erfindung betrifft außerdem die Verwendung elektrisch leitfähiger Pigmente, die nach dem erfindungsgemäßen Verfahren hergestellt worden sind, zur Pigmentierung von Lacken, Druckfarben, Kunststoffsystemen oder Coatings.

Schließlich betrifft die Erfindung Lacke, Druckfarben, Kunststoffsysteme oder Coatings, die mit einem elektrisch leitfähigen Pigment, welches nach dem erfindungsgemäßen Verfahren hergestellt worden ist, pigmentiert sind.

### AUSFÜHRUNGSBEISPIELE

### Herstellung der mit SnO₂ beschichteten Substrate

100 g Mica-Glimmer werden in 2,5 Litern deionisiertem Wasser suspendiert und auf 75°C erwärmt. Der pH-Wert diese Suspension wird auf 2,1 eingestellt. Anschließend werden 75 ml einer wässerigen Lösung von SnCl₄ bei einer Zutropfgeschwindigkeit von 0,5 bis 1 ml/min bei einer Rührgeschwindigkeit von 400 bis 1.000 rpm zugesetzt. Nachdem das SnCl₄ vollständig zugesetzt wurde, wurde das mit Zinn(IV)oxidhydrat beschichtete Substrat abgetrennt, gewaschen und bei 120 bis 140°C getrocknet. Das getrocknete Produkt wurde anschließend bei 600 bis 1.000°C ausgeglüht. Der Widerstand des erhaltenen, mit SnO₂ beschichteten Substrates betrug weniger als 1.000 kΩ·cm.

### Beispiel 1: Herstellung der elektrisch leitfähigen Pigmente

40 g des mit SnO₂ beschichteten Substrates werden in einem H₂/N₂-Gasstrom (15%/85%) für 30 Minuten bei 600°C reduziert. Der Widerstand des mit einem SnO₂/SnO/Sn-Mischoxid beschichteten Substrates beträgt zu diesem Zeitpunkt etwa 1 kΩ·cm. 20 g des mit dem SnO₂/SnO/Sn-Mischoxid beschichteten Substrates werden anschließend mit 1 g NaF und 1 g Na₂HPO₄ vermahlen und unter Stickstoffatmosphäre für 30 Minuten bei 600 °C geglüht. Es wurde ein schwach graues Pigmentpulver erhalten. Der Widerstand des so erhaltenen, mit F⁻ und PO₄³⁻ dotierten und auf einem Substrat aufgebrachten SnO₂/SnO/Sn-Mischoxides beträgt 35o Ω·cm.

### Beispiel 2: Herstellung der elektrisch leitfähigen Pigmente

20 g des mit SnO₂ beschichteten Substrates werden mit 1 g SnF₂ und 1 g SnHPO₄ vermahlen und unter Stickstoffatmosphäre für 30 Minuten bei 600°C geglüht. Es wurde ein schwach graues Pigmentpulver erhalten. Der Widerstand des so erhaltenen, mit F⁻ und PO₄³⁻ dotierten und auf einem Substrat aufgebrachten SnO₂/SnO-Mischoxides beträgt 300 Ω·cm.

## Patentansprüche

1. Verfahren zur Herstellung elektrisch leitfähiger Pigmente auf der Basis von mit F⁻ und/oder PO₄³⁻ dotierten und auf einem Substrat als elektrisch leitfähige Schicht aufgebrachten Zinn-Mischoxiden, **dadurch gekennzeichnet,**
- **daß** zunächst durch die Zugabe einer hydrolysierbaren Zinn(IV)-Verbindung zu einer wässerigen Lösung, die das Substrat in suspendierter Form enthält, bei einem pH-Wert und einer Temperatur, die die vollständige Hydrolyse der Zinn(IV)-Verbindung ermöglichen, ein mit Zinn(IV)oxidhydrat-beschichtetes Substrat hergestellt wird, welches von der Suspension abgetrennt und gegebenenfalls ausgewaschen und getrocknet wird und welches anschließend bei einer Temperatur zwischen 600 und 1000°C unter Bildung eines mit SnO₂ beschichteten Substrates ausgeglüht wird, und
- **daß** danach in weiteren Verfahrensschritten diese SnO₂-Schicht in eine Zinn-Mischoxid-Schicht überführt wird, die mit F⁻ und/oder PO₄³⁻ dotiert ist.

2. Verfahren zur Herstellung elektrisch leitfähiger Pigmente gemäß Anspruch 1, **dadurch gekennzeichnet, daß** die Überführung der SnO₂-Schicht in eine Zinn-Mischoxid-Schicht, die mit F⁻ und/oder PO₄³⁻ dotiert ist, dadurch erfolgt, daß das mit SnO₂ beschichtete Substrat zunächst mit einem Reduktionsmittel unter Bildung eines mit einem SnO₂/SnO/Sn-Mischoxid beschichteten Substrates reduziert wird und anschließend das mit diesem Zinn-Mischoxid beschichtete Substrat mit Salzen oder Salzmischungen, die F- und/oder PO₄³⁻ enthalten, vermahlen und schließlich bei einer Temperatur zwischen 300 und 900°C unter Ausschluß von Sauerstoff ausgeglüht wird.

3. Verfahren zur Herstellung elektrisch leitfähiger Pigmente nach Anspruch 2, **dadurch gekennzeichnet, daß** als Reduktionsmittel Wasserstoff oder Silicium verwendet werden.

4. Verfahren zur Herstellung elektrisch leitfähiger Pigmente nach Anspruch 2 oder 3, **dadurch gekennzeichnet, daß** als Salze oder Salzmischungen, die F⁻ und/oder PO₄³⁻ enthalten, NaF, NH₄F, Na₂HPO₄, (NH₄)₂HPO₄ oder Mischungen aus diesen Salzen verwendet werden.

5. Verfahren zur Herstellung elektrisch leitfähiger Pigmente nach Anspruch 2 bis 4, **dadurch gekennzeichnet, daß** das mit einem SnO₂/SnO/Sn-Mischoxid beschichtete Substrat mit Salzen oder Salzmischungen, die F⁻ und/oder PO₄³⁻ enthalten, in einer solchen Menge vermahlen wird, daß die Salze oder Salzmischungen einen Gewichtsanteil von 1 bis 15 Gew.-% bezogen auf das Gewicht des mit dem SnO₂/SnO/Sn-Mischoxid beschichteten Substrates besitzen.

6. Verfahren zur Herstellung elektrisch leitfähiger Pigmente gemäß Anspruch 1, **dadurch gekennzeichnet, daß** die Überführung der SnO₂-Schicht in eine Zinn-Mischoxid-Schicht, die mit F⁻ und/oder PO₄³⁻ dotiert ist, dadurch erfolgt, daß das mit SnO₂ beschichtete Substrat mit SnF₂ und/oder SnHPO₄ vermahlen und schließlich bei einer Temperatur zwischen 300 und 900°C unter Ausschluß von Sauerstoff ausgeglüht wird.

7. Verfahren zur Herstellung elektrisch leitfähiger Pigmente nach Anspruch 6, **dadurch gekennzeichnet, daß** das mit SnO₂ beschichtete Substrat mit SnF₂ und/oder SnHPO₄ in einer solchen Menge vermahlen wird, daß SnF₂ und/oder SnHPO₄ einen Gewichtsanteil von 1 bis 15 Gew.-% bezogen auf das Gewicht des mit SnO₂ beschichteten Substrates besitzen.

8. Verfahren zur Herstellung elektrisch leitfähiger Pigmente nach einem oder mehreren der Ansprüche 1 bis 7, **dadurch gekennzeichnet, daß** die hydrolysierbare Zinn(IV)-Verbindung in einer solchen Menge der Substrat-Suspension zugesetzt wird, daß das SnO₂ nach dem Ausglühen des mit Zinn(IV)oxidhydrat-beschichteten Substrates einen Gewichtsanteil von 5 bis 200 Gew.-% bezogen auf das Gewicht des Substrates besitzt.

9. Verfahren zur Herstellung elektrisch leitfähiger Pigmente nach einem oder mehreren der Ansprüche 1 bis 8, **dadurch gekennzeichnet, daß** als Substrat Glimmer, SiO₂-Flakes, Talkum, Graphit, Al₂O₃, BaSO₄, ZnO, SiO₂ oder eine Mischung aus diesen Stoffen verwendet werden.

10. Verfahren zur Herstellung elektrisch leitfähiger Pigmente nach einem oder mehreren der Ansprüche 1 bis 9, **dadurch gekennzeichnet, daß** das Mischoxid auf dem Substrat mit F- und PO₄³⁻ dotiert ist, wobei das Mengenverhältnis von F⁻ zu PO₄³⁻ zwischen 1:2 und 2:1 liegt.

11. Elektrisch leitfähige Pigmente, die nach einem Verfahren gemäß Anspruch 1 hergestellt worden sind.

12. Die Verwendung elektrisch leitfähiger Pigmente, die nach einem Verfahren gemäß Anspruch 1 hergestellt worden sind, zur Pigmentierung von Lacken, Druckfarben, Kunststoffsystemen oder Coatings.

13. Lacke, Druckfarben, Kunststoffsysteme oder Coatings, die mit einem elektrisch leitfähigen Pigment, welches nach einem Verfahren gemäß Anspruch 1 hergestellt worden ist, pigmentiert sind.
